**Europäisches Patentamt**

**European Patent Office**

**Office européen des brevets**

(19)

(11) Numéro de publication: **0 158 573**
B1

(12)

# FASCICULE DE BREVET EUROPEEN

(45) Date de publication du fascicule du brevet:
26.07.89

(51) Int. Cl.⁴: **B 32 B 27/18, B 44 F 1/02,**
**B 44 F 1/00, B 44 C 3/02**

(21) Numéro de dépôt: 85420063.1

(22) Date de dépôt: **04.04.85**

(54) **Ruban souple composite fluorescent et procédé de fabrication.**

(30) Priorité: 06.04.84 FR 8405695

(43) Date de publication de la demande:
16.10.85 Bulletin 85/42

(45) Mention de la délivrance du brevet:
26.07.89 Bulletin 89/30

(84) Etats contractants désignés:
BE DE GB IT

(56) Documents cités:
EP-A- 0 065 619
DE-A- 1 635 466
FR-A- 1 073 509
FR-A- 1 134 792
US-A- 4 111 349

(73) Titulaire: PAPETERIES ELCE Société Anonyme,
7-11 avenue Barthélémy Thimonnier, F-69300 Caluire
(FR)

(72) Inventeur: Croquelois, Jean Pierre, 13 rue Désirée,
F-69001 - Lyon (FR)

(74) Mandataire: Laurent, Michel et al, Cabinet LAURENT et
GUERRE B.P. 32, F-69131 Ecully Cédex (FR)

## Description

L'invention concerne un nouveau ruban souple composite fluorescent: elle se rapporte également à un procédé pour sa fabrication.

On connaît déjà des bandes de signalisation, notamment pour la signalisation routière, constituées par un film coloré, par exemple en jaune, imprimé sur son autre face, par exemple en rouge. Ce produit, bien que largement répandu, présente néanmoins l'inconvénient de mal résister à l'eau et aux ultra-violets.

Dans une autre forme de réalisation, on a proposé de coller un film coloré sur un tissu. Si ce produit constitue effectivement un progrès, il a néanmoins l'inconvénient notable d'être cher.

Dans le brevet EP-A-0 065 619, on a décrit un matériau transparent composite incolore constitué de plusieurs couches superposées de matière thermo-durcissable on thermoplastique coextrudée. Pour permettre de déterminer facilement et avec précision l'épaisseur et la régularité de l'ensemble, une des couches comporte des pigments fluorescents qui n'absorbent pas dans le visible, mais sont activés par les rayons U.V. Cette technique bien évidemment, du fait de la rigidité de l'ensemble et sa transparence, ne peut être envisagée pour la fabrication de bandes de signalisation routière.

L'invention pallie ces inconvénients. Elle concerne une bande du type en question qui soit souple, économique à fabriquer, qui résiste bien aux agents agressifs extérieurs, notamment aux ultra-violets, et enfin qui présente une bonne résistance mécanique.

Ce ruban souple composite fluorescent, constitué d'au moins deux couches coextrudées en matière thermoplastique: une première couche comportant des pigments fluorescents: une deuxième couche exempte de pigments fluorescents se caractérise:

— dans le visible; en ce que les pigments fluorescents de la première couche sont thermostables et sont colorés

— et en ce que la deuxième couche, exempte de pigments fluorescents, est colorée en blanc.

Par «pigment fluorescent coloré dans le visible», on désigne des pigments qui, par excitation sous l'effet de la lumière, génèrent de la fluorescence dans le visible (400 à 800 nanomètres).

Avantageusement, en pratique:

— le matériau composite est formé de trois couches superposées accolées, coextrudées, les deux couches extérieures comportant des pigments fluorescents colorés de teinte différente, alors que celle du centre comporte le pigment non fluorescent blanc;

— les films sont obtenus par coextrusion, notamment à l'aide d'une filière ronde et soufflage simultané;

— les films thermoplastiques sont en polyéthylène;

— les différentes couches extérieures ont une épaisseur sensiblement analogue, du moins ne variant pas de plus de 25% d'une couche à l'autre, et l'épaisseur totale de ce matériau composite est comprise entre cinquante et trois cents micromètres, en fonction de l'application envisagée et des performances requises; en effet, si la couche fluorescente est inférieure à cinquante micromètres, compte tenu de la dispersion des pigments et de leur prix fort élevé, la fluorescence sera insuffisante; de même si cette couche est supérieure à trois cents micromètres, on augmente alors inutilement le prix sans amélioration proportionnelle.

Un procédé pour réaliser un tel matériau composite consiste à coextruder au moins deux compositions de polymère thermoplastique de même nature chimique contenant respectivement, l'une un colorant pigmentaire non fluorescent, l'autre un pigment fluorescent.

Avantageusement, en pratique:

— la composition contenant le pigment fluorescent est obtenue en réalisant tout d'abord un mélange maître du polymère et du pigment, par exemple à 50% den poids de chacun des constituants, puis à ajouter ce mélange maître au polymère à extruder;

— la coextrusion est effectuée dans une machine à filière ronde et soufflage simultané.

Comme matière thermoplastique, on utilise des matières extrudables, notamment par soufflage. On peut citer des polyamides et le polypropylène. On obtient de bons résultats avec le polyéthylène basse et haute densité.

Comme déjà dit, le mélange maître: polymère-pigment fluorescent coloré est avantageusement à 50% en poids, puis ce mélange maître est additionné à raison de 15% en poids au polymère à extruder.

Les pigments mis en œuvre doivent être stables dans les conditions d'extrusion. On fait appel donc aux pigments dénommés thermostables. On a constaté que l'on obtenait un bon niveau de fluorescence si la densité par mètre carré des pigments fluorescents dans le film est comprise entre un à dix et de préférence voisine de trois grammes par mètre carré.

La manière dont l'invention peut être réalisée et les avantages qui en découlent ressortiront mieux des exemples de réalisation qui suivent donnés à titre indicatif et non limitatif, à l'appui des figures annexées.

La figure 1 est une représentation schématique d'un matériau composite filmogène conforme à l'invention.

La figure 2 est une représentation schématique d'une deuxième forme de réalisation de ce matériau.

La figure 3 est une représentation symbolique d'un mode de fabrication de ce produit.

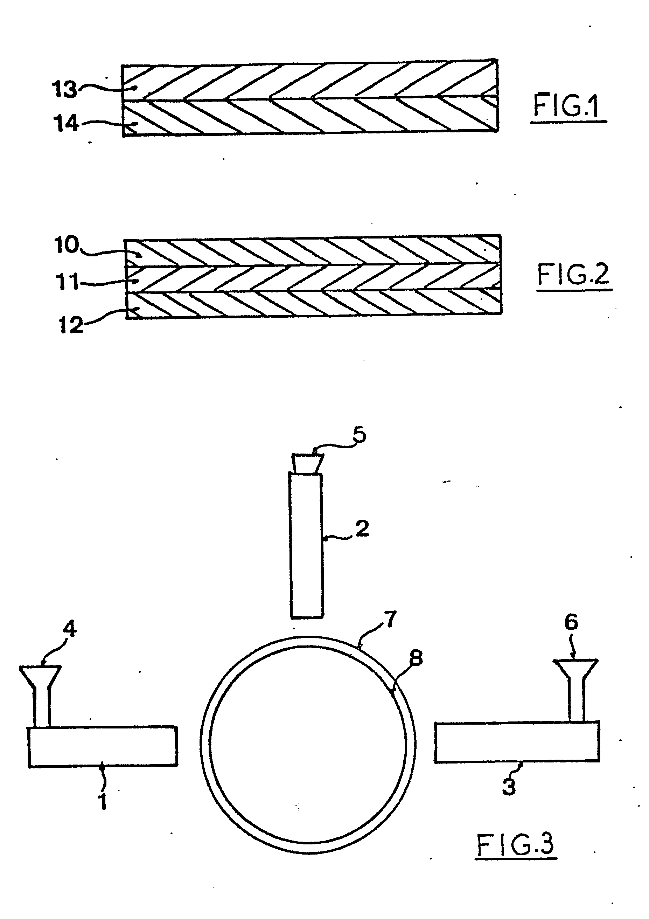

En se référant à la figure 3, l'installation de fabrication de ce matériau comprend trois boudineuses monovis respectivement (1, 2, 3) avec leurs trémies de chargement (4, 5, 6). Ces boudineuses (1–3) alimentent l'entrée d'une filière circulaire (7) dans laquelle simultanément est soufflé un courant d'air et d'où est tiré un film tubulaire (8) par des organes classiques appropriés. Le film tubulaire (8) refroidi est ensuite bobiné de manière conventionnelle, puis découpé par des moyens également classiques.

Exemple 1

A l'aide du dispositif de la figure 3, on réalise un matériau filmogène composite sous forme de trois couches de la manière suivante.

On réalise tout d'abord un mélange maître à 50% en poids de polyéthylène basse densité et de pigments fluorescents thermostables, par exemple du type de celui qui est commercialisé par la société belge RADIANT COLOR, sous la dénomination «K 600». Un premier mélange maître est réalisé avec un pigment fluorescent jaune et un second mélange maître identique est réalisé avec un pigment orange-rouge. Le premier mélange maître de couleur jaune est additionné à raison de 15% en poids avec du polyéthylène basse densité analogue à celui contenu dans le mélange maître, puis ce nouveau mélange est introduit dans la trémie (4) de la boudineuse (1). De la même manière, la boudineuse (3) est additionnée également à raison de 15% en poids par l'autre mélange maître et cet ensemble est chargé dans la trémie (6) de la boudineuse (3).

En revanche, la boudineuse centrale (2) est chargée par une composition du même polyéthylène additionné à raison de 15% en poids d'un mélange maître de TiO$_2$ à 50% en poids.

On obtient un film (8) qui, après refroidissement et découpage, présente la structure symbolisée à la figure 2 ayant une épaisseur de quinze centièmes de millimètre, constitué de trois couches superposées coextrudées respectivement:
- (10): film contenant un pigment fluorescent jaune d'environ 65 micromètres d'épaisseur,
- (11): disposé à cœur, film de polyéthylène coloré en blanc d'épaisseur 20 micromètres,
- (12): film de polyéthylène comportant des pigments fluorescents orange-rouge, d'épaisseur voisine de 65 micromètres.

Du fait de la coextrusion, les trois films superposés (10, 11, 12) adhèrent fermement les uns aux autres.

Comme déjà dit, la couche centrale (11) est colorée et non fluorescente, et plus particulièrement elle est colorée en blanc, pour empêcher le passage de la fluorescence de la couche extérieure (10) vers l'autre couche (12) extérieure et vice-et-versa, c'est-à-dire en d'autres termes pour bien améliorer le rendu de la fluorescence.

Exemple 2

On répète l'exemple précédent, mais en supprimant la boudineuse (3). Le matériau composite obtenu est montré à la figure 1, dans laquelle (13) désigne la couche contenant le pigment fluorescent et (14) la couche colorée en blanc.

Exemple 3

On répète l'exemple 1, mais en supprimant cette fois l'oxyde de titane (colorant blanc) dans la couche intermédiaire (11), (boudineuse 2).

On obtient un matériau complexe, souple, ayant les mêmes caractéristiques mécaniques qu'à l'exemple 1, mais dans lequel la fluorescence est réduite pratiquement de moitié, et dans lequel les deux couleurs respectivement jaune de la couche (10) et orange de la couche (12) se mélangent, ce qui est nuisible pour des applications de signalisation routière.

Si dans les exemples décrits, on a fait appel à une filière circulaire de coextrusion, on peut également utiliser une filière plate avec tirage du film et bobinage de manière conventionnelle.

Les matériaux composites filmogènes préparés conformément à l'invention présentent de nombreux avantages, notamment:
- une meilleure résistance aux agents atmosphériques, tels que l'eau, les ultra-violets et la lumière;
- une meilleure résistance aux solvants.

De ce fait, ils peuvent recevoir de nombreuses applications. On peut citer:
- les bandes de sécurité et de signalisation, notamment pour des applications routières;
- les bretelles vestimentaires de sécurité;
- des parties de vêtements de sécurité;
- des éléments de signalisation de véhicule ou de navires;
- des panneaux de sécurité.

**Revendications**

1. Ruban souple composite fluorescent, constitué d'au moins deux couches (10-14) coextrudées en matière thermoplastique:
- une première couche (10, 12, 13) comportant des pigments fluorescents;
- une deuxième couche (11, 14) exempte de pigments fluorescents;
caractérisé:
- en ce que les pigments fluorescents de la première couche (10, 12, 13) sont thermostables et sont colorés dans le visible;
- et en ce que la deuxième couche (11, 14), exempte de pigments fluorescents, est colorée en blanc.

2. Ruban selon la revendication 1, caractérisé en ce qu'il se compose de trois couches (10, 11, 12) superposées, accolées, coextrudées, les deux couches externes (10, 12) comportant des pigments fluorescents colorés, alors que la couche centrale (11) comporte des pigments blancs non fluorescents.

3. Ruban selon l'une des revendications 1 et 2, caractérisé en ce que les différentes couches (10-14) ont une épaisseur sensiblement égale, et en ce que l'épaisseur totale de l'ensemble est comprise entre cinquante et trois cents micromètres.

4. Procédé pour fabriquer un ruban fluorescent composite selon l'une des revendications 1 à 3, caractérisé en ce qu'il consiste à coextruder au moins deux compositions de polymère thermoplastique de même nature chimique contenant respectivement l'une un colorant blanc non fluorescent, l'autre des pigments fluorescents colorés dans le visible.

5. Procédé selon la revendication 4, caractérisé en ce que la composition thermoplastique contenant les pigments fluorescents est obtenue en réalisant tout d'abord un mélange maître contenant pour moitié le polymère thermoplastique et le pigment fluorescent, puis ce mélange maître (4, 6) est ajouté à raison de 15% en poids à des granulés du polymère thermoplastique à extruder, et enfin l'ensemble est coextrudé au moyen d'une machine à filière circulaire et soufflage simultané.

## Claims

1. Fluorescent composite flexible strip, constituted of at least two co-extruded layers (10–14) of thermoplastic material:
 – a first layer (10, 12) containing fluorescent pigments;
 – a second layer (11, 14) containing no fluorescent pigments;
characterized in that:
 – the fluorescent pigments of the first layer (10, 12, 13) are thermostable and colored within the spectrum of visible light;
 – and in that the second layer (11, 14), containing no fluorescent pigments, is white-colored.

2. Strip according to claim 1, characterized in that it is composed of three superposed, coupled, co-extruded layers (10, 11, 12), the two external layers (10, 12) containing colored fluorescent pigments, whereas the central layer (11) contains non-fluorescent white pigments.

3. Strip according to any one of claims 1 and 2, characterized in that the different layers are substantially equal in thickness, and in that the total thickness of the assembly ranges between fifty and three hundred micrometers.

4. Process for manufacturing a composite fluorescent strip according to one of claims 1 to 3, characterized in that it consists in co-extruding at least two compositions of thermoplastic polymer of same chemical nature containing respectively, one a non-fluorescent white coloring agent, and the other fluorescent pigments colored within the spectrum of visible light.

5. Process according to claim 4, characterized in that the thermoplastic composition containing the fluorescent pigments is obtained by preparing first a master-mixture containing, in half proportions, the thermoplastic polymer and the fluorescent pigment, then adding this master-mixture (4, 6), at the rate of 15% by weight, to particles of the thermoplastic polymer to be extruded, and finally co-extruding the whole in a machine equipped with circular die and simultaneous blowing.

## Patentansprüche

1. Biegsames, fluoreszierendes, zusammengesetztes Band, das aus zumindest zwei koextrudierten Schichten (10–14) aus thermoplastischem Material besteht;
 – mit einer ersten Schicht (10, 12, 13), die fluoreszierende Pigmente enthält;
 – mit einer zweiten Schicht (11, 14) ohne fluoreszierende Pigmente,
dadurch gekennzeichnet,
 – daß die fluoreszierenden Pigmente der ersten Schicht (10, 12, 13) wärmebeständig und im sichtbaren Licht farbig sind, und
 – daß die zweite Schicht (11, 14) ohne die farbigen Pigmente weiß gefärbt ist.

2. Band nach Anspruch 1, dadurch gekennzeichnet, daß es aus drei übereinandergelegten, aneinandergefügten, koextrudierten Schichten (10, 11, 12) aufgebaut ist, wobei die beiden außenliegenden Schichten (11, 12) farbige fluoreszierende Pigmente enthalten, wohingegen die mittige Schicht (11) weiße, nicht-fluoreszierende Pigmente enthält.

3. Band nach Anspruch 1 oder 2, dadurch gekennzeichnet, daß die verschiedenen Schichten (10–14) eine etwa gleiche Dicke aufweisen, und daß die Gesamtdicke des Zusammenbaus zwischen fünfzig und dreihundert Mikrometern liegt.

4. Verfahren zur Herstellung eines zusammengesetzten, fluoreszierenden Bandes nach einem der Ansprüche 1 bis 3, gekennzeichnet durch Koextrudieren von zumindest zwei polymeren thermoplastischen Materialien gleicher chemischer Natur, von denen eine einen nicht fluoreszierenden weißen Farbstoff enthält, wohingegen die andere fluoreszierende Pigmente enthält, die im sichtbaren Licht farbig sind.

5. Verfahren nach Anspruch 4, dadurch gekennzeichnet, daß das thermoplastische Material, das die fluoreszierenden Pigmente enthält, dadurch erhalten wird, daß zunächst eine konzentrierte Vormischung hergestellt wird, die als Bestandteile das thermoplastische Polymer und die fluoreszierenden Pigmente enthält, daß anschließend die Vormischung (4, 6) in einer Menge von 15 Gew.-% den zu extrudierenden Granalien aus thermoplastischem Polymer hinzugefügt wird, und daß schließlich die Zusammensetzung mittels einer Maschine mit einem kreisförmigen Spritzmundstück koextrudiert und gleichzeitig blasgeformt wird.

13

14

FIG.1

10

11

12

FIG.2

5

4

2

7

8

6

1

3

FIG.3